# EUROPÄISCHE PATENTANMELDUNG

(11) **EP 1 564 394 A2**
(43) Veröffentlichungstag der Anmeldung: **17.08.2005**
(21) Anmeldenummer: 04106840.4
(22) Anmeldetag: 22.12.2004
(51) Int. Cl.: F02D 41/38

(54) **Verfahren und Vorrichtung zur Steuerung einer Brennkraftmaschine**

(30) Priorität: 13.02.2004 DE 102004007048
(71) Anmelder: ROBERT BOSCH GMBH, 70442 Stuttgart (DE)
(72) Erfinder: Stapel, Dietmar, 48317, Drensteinfurt (DE)

(57) **Zusammenfassung**

Es werden eine Vorrichtung und ein Verfahren zur Steuerung einer Brennkraftmaschine beschrieben. Ausgehend von der Druckänderung in einem Hochdruckbereich wird der Beginn und/oder das Ende der Kraftstoffeinspritzung erkannt.

## Beschreibung

Die Erfindung betrifft ein Verfahren und eine Vorrichtung zur Steuerung einer Brennkraftmaschine gemäß den Oberbegriffen der unabhängigen Ansprüche.

Ein Verfahren und eine Vorrichtung zur Steuerung einer Brennkraftmaschine sind aus der DE 197 26 756 bekannt. Bei dem dort beschriebenen Verfahren wird der Druck in einem Kraftstoffspeicher erfasst und der maximale Druckeinbruch bei der Einspritzung ausgewertet. Ausgehend von diesem Druckeinbruch wird die eingespritzte Kraftstoffmenge berechnet.

Üblicherweise wird bei Hochdruckkraftstoffeinspritzsystemen für Verbrennungsmotoren mit einem Kraftstoffspeicher der Druck im Kraftstoffspeicher mittels eines Drucksensors gemessen. Dieses Signal wird für die Druckregelung und für die Zumessung, d.h. für die Ansteuerdauer der elektrisch gesteuerten Ventile verwendet. Die Auswertung des Drucksignals für die Hochdruckregelung erfolgt in einem festen Zeitraster. Für die Zumessung der eingespritzten Kraftstoffmenge wird zu einer bestimmten Zeit vor der Einspritzung das Drucksignal ausgewertet. Die Einspritzung verursacht einen Einbruch des Drucks, welcher vom Drucksensor erfasst wird. Erfindungsgemäß wurde erkannt, dass bei der Auswertung gemäß dem Stand der Technik Informationen, die im Drucksignal enthalten sind, nicht ausgewertet werden.

### Vorteile der Erfindung

Durch das erfindungsgemäße Verfahren und die erfindungsgemäße Vorrichtung wird die Information über den Einspritzverlauf, welcher im Drucksignal enthalten ist, zur Steuerung der Brennkraftmaschine verwendet. Besonders vorteilhaft ist, dass ausgehend von der Druckänderung der Beginn und/oder das Ende der Kraftstoffeinspritzung erkannt wird. Somit besteht die Möglichkeit, den Spritzbeginn, das Spritzende und die Spritzdauer zu bestimmen, und mit dem Ansteuersignal in Beziehung zu setzen. Dabei ergibt sich die Möglichkeit, korrigierend auf die Ansteuersignale der Einspritzventile einzugreifen. Eine zusätzliche Sensorik zur Erfassung dieser Größen kann eingespart werden. Der Beginn der Kraftstoffeinspritzung wird erkannt wird, wenn der Druck abfällt. Das Ende der Kraftstoffeinspritzung erkannt wird, wenn der Druck ansteigt.

Bei einer einfachen Realisierung wird der Beginn oder das Ende der Kraftstoffeinspritzung erkannt wird, wenn die Änderung des Drucks größer als ein Schwellenwert ist. Alternativ zur Änderung kann auch die Steigung des Drucks ausgewertet werden.

Erfolgt die Auswertung nur in bestimmten Zeitbereichen, in denen der Beginn bzw. das Ende der Einspritzung voraussichtlich eintritt, kann der Aufwand bei der Signalauswertung Rechnerbelastung deutlich reduziert werden.

Besonders vorteilhaft ist es, wenn mittels der erfassten Werte für den Beginn und/oder das Ende der Einspritzungen, auf Fehler und/oder auf Drifterscheinungen erkannt werden. Insbesondere können Fehler des bereits erkannt werden, bevor es zum völligen Ausfall des Injektors kommt.

### Zeichnung

Die Erfindung wird nachstehend anhand der in der Zeichnung dargestellten Ausführungsformen erläutert. Es zeigen
- Figur 1: ein Blockdiagramm der erfmdungsgemäßen Vorrichtung,
- Figur 2: verschiedene über der Zeit aufgetragene Signale und
- Figur 3: ein Flussdiagramm der erfindungsgemäßen Vorgehensweise.

### Beschreibung des Ausführungsbeispiels

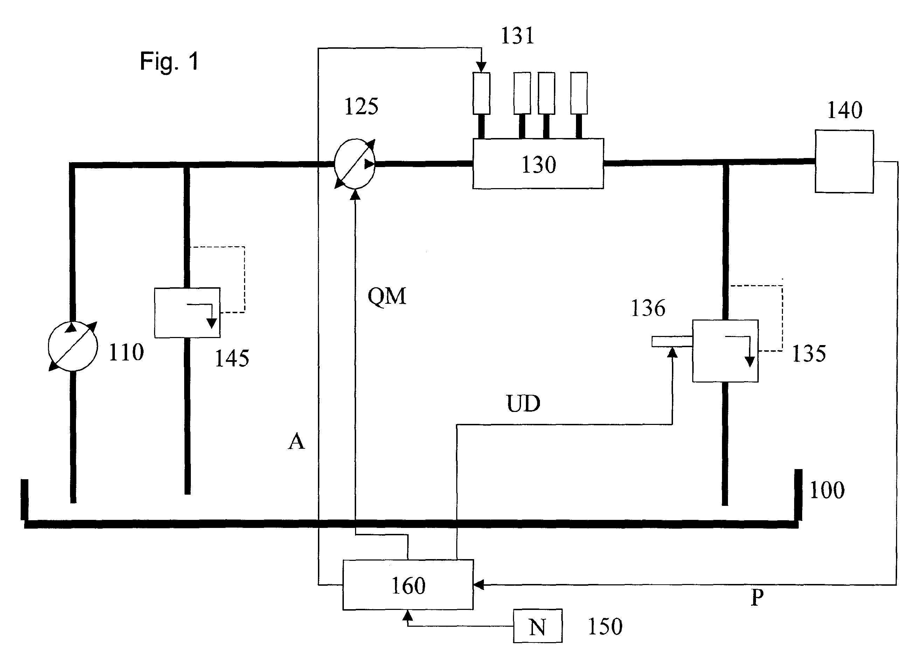

In Figur 1 sind die für das Verständnis der Erfindung erforderlichen Bauteile eines Kraftstoffversorgungssystems einer Brennkraftmaschine mit Hochdruckeinspritzung dargestellt. Das dargestellte System wird üblicherweise als Common-Rail-System bezeichnet.

Mit 100 ist ein Kraftstoffvorratsbehälter bezeichnet. Dieser steht über eine Vorförderpumpe 110 mit einer Hochdruckpumpe 125 in Verbindung. Die Verbindungsleitung zwischen dem Vorförderpumpe 110 und der Hochdruckpumpe 125 kann über ein Niederdruckbegrenzungsventil 145 mit dem Vorratsbehälter 100 in Verbindung stehen.

Die Hochdruckpumpe 125 steht mit einem Rail 130 in Verbindung. Das Rail 130 wird auch als Speicher bezeichnet und steht über Kraftstoffleitungen mit verschiedenen Injektoren 131 in Kontakt. Über ein Druckregelventil 135 ist das Rail 130 mit dem Kraftstoffvorratsbehälter 100 verbindbar. Das Druckregelventil 135 ist mittels einer Spule 136 steuerbar. Vorzugsweise ist das Druckregelventil 135 derart ausgebildet, dass es bei einer Beaufschlagung mit einem bestimmten Ansteuersignal einen bestimmte, Druck im Rail 130 hält, und nicht benötigten Kraftstoff in den Vorratsbehälter 100 abläßt.

Die Leitungen zwischen dem Ausgang der Hochdruckpumpe 125 und dem Eingang des Druckregelventils 135 einschließlich der Zuleitungen zu den Injektoren werden als Hochdruckbereich bezeichnet. In diesem Bereich steht der Kraftstoff unter hohem Druck. Der Druck im Hochdruckbereich wird mittels eines Sensors 140 erfasst. Die Leitungen zwischen dem Tank 100 und der Hochdruckpumpe 125 werden als Niederdruckbereich bezeichnet. Bei einer besonders vorteilhaften Ausgestaltung ist der Sensor 140 zur Erfassung des Drucks im Hochdruckbereich in den Zuleitungen zu den Injektoren angeordnet.

Eine Steuerung 160 beaufschlagt die verschiedenen Stellglieder, wie beispielsweise die Hochdruckpumpe 125 mit einem Signal QM, die Injektoren 131 mit einem Signal A und/oder das Druckregelventil 135 mit einem Signal UD. Die Steuerung 160 verarbeitet verschiedene Signale verschiedener Sensoren 150, die den Betriebszustand der Brennkraftmaschine und/oder des Kraftfahrzeugs, dass die Brennkraftmaschine antreibt, charakterisieren. Ein solcher Betriebszustand ist beispielsweise die Drehzahl N der Brennkraftmaschine.

Diese Einrichtung arbeitet wie folgt: Der Kraftstoff, der sich im Vorratsbehälter befindet, wird von der Vorförderpumpe 110 zur Hochdruckpumpe gefördert.

Steigt der Druck im Niederdruckbereich auf unzulässig hohe Werte an, so öffnet das Niederdruckbegrenzungsventil 145 und gibt die Verbindung zwischen dem Ausgang der Vorförderpumpe 110 und dem Vorratsbehälter 100 frei.

Die Hochdruckpumpe 125 fördert den Kraftstoff vom Niederdruckbereich in den Hochdruckbereich. Die Hochdruckpumpe 125 baut im Rail 130 einen sehr hohen Druck auf. Üblicherweise werden bei Systemen für fremdgezündete Brennkraftmaschinen Druckwerte von etwa 30 bis 100 bar und bei selbstzündenden Brennkraftmaschinen Druckwerte von etwa 1000 bis 2000 bar erzielt. Über die Injektoren 131 kann der Kraftstoff unter hohem Druck den einzelnen Zylinder der Brennkraftmaschine zugemessen werden.

Mittels des Sensors 140 wird der Druck P im Rail bzw. im gesamten Hochdruckbereich erfaßt. Mittels der steuerbaren Hochdruckpumpe 125 und dem Druckregelventil wird der Druck im Hochdruckbereich geregelt.

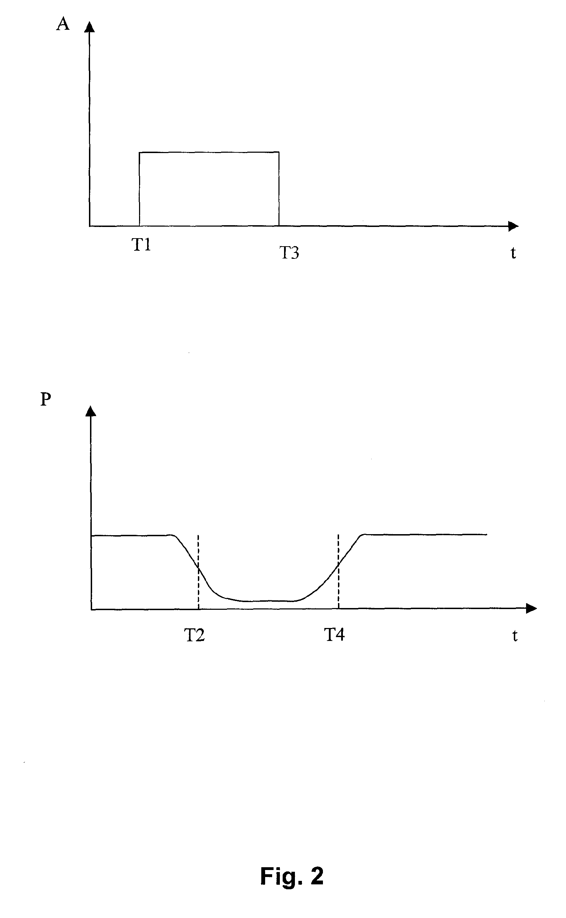

In Figur 2a ist das Ansteuersignal A für einen der Injektoren über der Zeit t aufgetragen. In Figur 2b ist der entsprechende Raildruck P beispielhaft ebenfalls über der Zeit aufgetragen. An Stelle der Zeit kann auch die Kurbelwellenstellung verwendet werden. Zum Zeitpunkt T1 erfolgt die Ansteuerung des Injektors derart, dass die Einspritzung beginnen soll. Zwischen der Ausgabe des Ansteuersignals A zum Zeitpunkt T1 und dem Beginn der tatsächlichen Einspritzung verstreicht üblicher Weise eine gewisse Zeit. Sobald die Einspritzung beginnt, fällt der Raildruck P im Hochdruckspeicher ab. Dies ist zum Zeitpunkt T2 der Fall. Zum Zeitpunkt T3 endet die Ansteuerung des Injektors und mit einer gewissen zeitlichen Verzögerung steigt der Raildruck zum Zeitpunkt T4 wieder an.

Das bedeutet, der Zeitpunkt T2 charakterisiert den Beginn der Kraftstoffeinspritzung und der Zeitpunkt T4 das Ende der Kraftstoffeinspritzung. Diese Signale werden erfindungsgemäß durch eine entsprechende Auswertung des Raildrucks ermittelt, d.h. ausgehend von dem Abfall des Raildrucks zum Zeitpunkt T2 wird der Beginn der Kraftstoffzumessung und zum Zeitpunkt T4 der Wiederanstieg des Raildruckes erkannt. Vorteilhaft an dieser Vorgehensweise ist, dass ein Signal ausgewertet wird, dessen Sensor bereits zur Steuerung anderer Größen, beispielsweise des Raildrucks an sich, vorhanden ist.

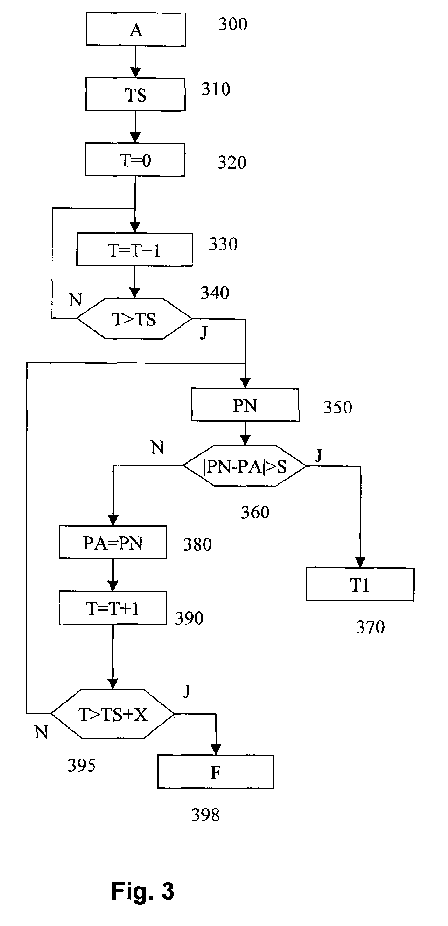

Die erfindungsgemäße Vorgehensweise ist nun in Figur 3 detailliert anhand eines Flussdiagrammes dargestellt. In einem ersten Schritt 300 erfolgt zum Zeitpunkt T1 die Ausgabe des Ansteuersignals A. Im anschließenden Schritt 310 wird ein erwarteter Wert TS für den Abstand zwischen dem Zeitpunkt T1 und T2 berechnet. Dabei wird der erwartete Wert TS so gewählt, dass er deutlich kleiner ist, als der Abstand zwischen T1 und T2.

Im Anschließenden Schritt 320 wird ein Zähler T auf den Wert 0 gesetzt. Im Schritt 330 wird der Zähler T erhöht. Die Abfrage 340 überprüft, ob der Zählerinhalt T größer, als der berechnete Wert TS ist. D.h. es wird überprüft, ob der Zeitpunkt T2 kurz bevorsteht. Ist dies nicht der Fall, so erfolgt erneut Schritt 330. Ist dies der Fall, d.h. der Beginn der Einspritzung steht unmittelbar bevor, erfolgt die Erfassung des Raildrucks. In Schritt 350 wird der aktuelle Wert PN des Raildrucks erfasst. Anschließend in Abfrage 360 wird überprüft, ob die Differenz zwischen dem aktuellen Wert PN und dem bei der vorangehenden Messung gemessenen Wert PA größer als ein Schwellwert S ist. Ist dies der Fall, so wird in Schritt 370 der Zeitpunkt TS abgespeichert.

D.h. fällt der Raildruck zwischen zwei Messungen um mehr als ein erwarteter Wert ab, erkennt die Abfrage 360 diesen Zeitpunkt als Einspritzbeginn. Erkennt die Abfrage 360, dass diese Differenz kleiner als der Schwellwert S ist, wird der alte Wert PA mit dem neuen Wert PN für den Raildruck überschrieben und der Zeitzähler T in Schritt 390 erhöht. Die sich anschließende Abfrage 395 überprüft, ob der Zeitzähler T größer als der Schwellwert TS plus ein bestimmter Wert X ist. Ist dies der Fall, so wird in Schritt 398 auf Fehler erkannt. Ist dies nicht der Fall, so wird in Schritt 350 der neue Messwert PN für den Raildruck erneut erfasst. Dies bedeutet, dass auf Fehler erkannt wird, wenn innerhalb einer bestimmten Zeit X + TS nach der Ansteuerung oder nach einer bestimmten Messzeit X auf Fehler erkannt wird, wenn keine signifikante Änderung des Raildrucks auftritt.

Bei einer vereinfachten Ausführungsform ist vorgesehen, dass die Zeitzähler T und damit die Schritte 320, 330, 340, 390 und 395 weggelassen werden und der Raildruck ständig erfasst wird, sobald die Abfrage erkennt, dass sich der Raildruck ändert, d.h. abfällt, wird der Einspritzbeginn erkannt.

Entsprechend wird bei der Ermittlung des Einspritzendes vorgegangen. In diesem Fall überprüft die Abfrage 360, ob die Änderung PN-PA kleiner als ein Schwellenwert ist, d.h. ob der Raildruck seit der letzten Messung um mehr als einen bestimmten Wert angestiegen ist.

Alternativ kann auch vorgesehen sein, dass nicht die Änderung des Raildrucks erfasst wird, sondern dass das Raildrucksignal differenziert wird und die Ableitung betrachtet wird. In diesem Fall wird überprüft, ob die Ableitung einen bestimmten Wert überschreitet oder unterschreitet. D.h. erfindungsgemäß wird überprüft, ob eine Druckänderung vorliegt. Fällt der Druck ab, so wird der Beginn der Einspritzung erkannt, steigt der Druck an, so wird das Ende der Einspritzung erkannt. Insbesondere wird der Beginn oder das Ende erkannt, wenn die Änderung des Drucks größer als ein Schwellwert ist, bzw. der Beginn wird erkannt, wenn die Steigung des Drucks einen Schwellwert unterschreitet, das Ende der Einspritzung wird erkannt, wenn die Steigung des Drucks einen Schwellwert überschreitet.

Erfindungsgemäß wird aus dem Verlauf des Druckes im Rail des Common Rail Systems das Öffnen des elektrisch angesteuerten Injektors erkannt und somit der Einspritzbeginn ermittelt. Dieser Einspritzbeginn wird durch den Einbruch im Druck, d.h. durch die Druckabnahme, erkannt. Entsprechend wird auf das Schließen des Ventils geschlossen. Beim Schließen des Ventils bzw. das Beenden der Einspritzung wird auf den Druckanstieg erkannt.

Wird eine kontinuierliche Abtastung des Drucksignals mit hoher Frequenz aus Gründen der Rechnerbelastung nicht gewünscht, so kann, wie in Figur 3 dargestellt, vorgegangen werden. Dort wird die Abtastung des Drucksignals mit hoher Auflösung nur für ein eingeschränktes Zeitintervall aktiviert. D.h. die genaue Druckerfassung erfolgt nur einen gewissen Zeitraum vor dem erwarteten Ereignis, bis das Ereignis erkannt ist. Hierzu wird ein erwarteter Wert TS berechnet, der sicher vor dem erwarteten Ereignis liegt.

Vorzugsweise wird der erwartete Wert TS ausgehend von dem Ansteuersignal A vorgegeben.

Bei einer vereinfachten Realisierung kann vorgesehen sein, dass zum Zeitpunkt T1 der Zähler auf 0 gesetzt wird. Ab der Ansteuerung zum Zeitpunkt T1 bzw. zum Zeitpunkt T3 läuft der Zeitzähler. Bei dieser Ausführungsform ergibt sich der Einspritzbeginn einfach dadurch, dass zu der Zeit T1, bei der die Ansteuerung erfolgt, der Wert des Zeitzählers bei Erkennen des Beginns der Einspritzung bzw. des Endes der Einspritzung hinzugezählt wird.

Ausgehend von dem erkannten Einspritzbeginn und dem Einspritzende kann auch die Einspritzdauer und damit auf die tatsächlich eingespritzte Kraftstoffmenge bestimmt werden.

Vorzugsweise werden die so ermittelten Größen bezüglich des Einspritzbeginns, des Einspritzendes und/oder der Einspritzdauer und damit der Einspritzmenge im Steuergerät weiter verarbeitet. Vorzugsweise werden diese Größen einer Regelung zugeführt. Die so ermittelten Größen dienen dann als Istwert einer Regelung, die die entsprechende Größe auf einen vorbestimmten Wert einstellt. Als Stellgröße dient dabei jeweils das Ansteuersignal A, wobei hier insbesondere der Beginn und/oder das Ende des Ansteuersignals als Istgröße dient. Dies bedeutet, die ermittelten Werte werden mit einem erwarteten Wert verglichen und abhängig von dem Vergleich die Steuerung der Kraftstoffzumessung korrigiert wird.

Ferner ist vorteilhaft, der Einspritzbeginn und/oder das Einspritzende mit dem jeweiligen Beginn und Ende des Ansteuersignals korreliert werden. Verändert sich der Abstand zwischen dem Beginn des Ansteuersignals zum Zeitpunkt T1 und dem Einspritzbeginn zum Zeitpunkt T2 während der Betriebszeit, d.h. der Abstand zwischen T1 und T2 verändert sich, so wird das Ansteuersignal, das heißt der Zeitpunkt T1, derart korrigiert, dass der Zeitpunkt T2 über die Betriebszeit konstant bleibt.

Verändert sich der Abstand zwischen dem Ende des Ansteuersignals zum Zeitpunkt T3 und dem Einspritzende zum Zeitpunkt T4 während der Betriebszeit, d.h. der Abstand zwischen T3 und T4 verändert sich, so wird das Ansteuersignal, das heißt der Zeitpunkt T3, derart korrigiert, dass der Zeitpunkt T4 über die Betriebszeit konstant bleibt.

Dies bedeutet Drifterscheinungen, die beispielsweise auf Alterungseffekten beruhen, können erkannt und ausgeglichen werden. Bei gleichen Betriebszuständen bleibt der Einspritzbeginn und/oder das Einspritzende über die gesamte Lebensdauer der Brennkraftmaschine konstant.

Des weiteren bietet die Erfassung dieser Größen die Möglichkeit, Fehler der einzelnen Komponenten zu erkennen. Verändert sich beispielsweise der Abstand zwischen dem Zeitpunkt T 1 und dem Zeitpunkt T2, d.h. zwischen der Ansteuerung und dem Beginn bzw. zwischen der Ansteuerung und dem Ende der Einspritzung um mehr als ein vorgegebener Wert, so wird ein Defekt, insbesondere des Injektors erkannt.

## Patentansprüche

1. Verfahren zur Steuerung einer Brennkraftmaschine, wobei der Druck in einem Hochdruckbereich erfasst wird, **dadurch gekennzeichnet, dass** ausgehend von der Druckänderung der Beginn und/oder das Ende der Kraftstoffeinspritzung erkannt wird.

2. Verfahren nach Anspruch 1, **dadurch gekennzeichnet, dass** der Beginn der Kraftstoffeinspritzung erkannt wird, wenn der Druck abfällt.

3. Verfahren nach Anspruch 1, **dadurch gekennzeichnet, dass** das Ende der Kraftstoffeinspritzung erkannt wird, wenn der Druck ansteigt.

4. Verfahren nach einem der vorhergehenden Ansprüche, **dadurch gekennzeichnet, dass** der Beginn oder das Ende der Kraftstoffeinspritzung erkannt wird, wenn die Änderung des Drucks größer als ein Schwellenwert ist.

5. Verfahren nach einem der vorhergehenden Ansprüche, **dadurch gekennzeichnet, dass** der Beginn der Kraftstoffeinspritzung erkannt wird, wenn die Steigung des Drucks einen Schwellenwert unterschreitet.

6. Verfahren nach einem der vorhergehenden Ansprüche, **dadurch gekennzeichnet, dass** das Ende der Kraftstoffeinspritzung erkannt wird, wenn die Steigung des Drucks einen Schwellenwert überschreitet.

7. Verfahren nach Anspruch 1, **dadurch gekennzeichnet, dass** die ermittelten Werte mit einem erwarteten Wert verglichen werden und abhängig von dem Vergleich die Steuerung der Kraftstoffzumessung korrigiert wird.

8. Verfahren nach Anspruch 1, **dadurch gekennzeichnet, dass** ausgehend von den ermittelten Werten Drifteffekte erkannt und korrigiert werden.

9. Verfahren nach Anspruch 1, **dadurch gekennzeichnet, dass** ausgehend von den ermittelten Werte auf Fehler erkannt wird.

10. Vorrichtung zur Steuerung einer Brennkraftmaschine, mit einem Sensor zur Erfassung des Drucks in einem Hochdruckbereich, **dadurch gekennzeichnet, dass** Mittel vorgesehen sind, die ausgehend von der Druckänderung den Beginn und/oder das Ende der Kraftstoffeinspritzung erkennen.
